Europäisches Patentamt

**European Patent Office**

**Office européen des brevets**

(11) Publication number: **0 063 196**
A2

# (12) EUROPEAN PATENT APPLICATION

(21) Application number: **81304986.3**

(22) Date of filing: **22.10.81**

(51) Int. Cl.³: **G 03 B 23/00**
**G 03 B 21/64, G 02 B 27/02**

(30) Priority: **16.04.81 GB 8112180**
**24.06.81 GB 8119477**

(43) Date of publication of application:
**27.10.82 Bulletin 82/43**

(84) Designated Contracting States:
**AT BE CH DE FR IT LI LU NL SE**

(71) Applicant: **CITADEL SERVICES LIMITED**
**39/41 High Street St. Peter Port**
**Guernsey Channel Islands(GB)**

(72) Inventor: **Clover, George Robin**
**3 Wallside Monkwell Square**
**Barbican London EC2(GB)**

(74) Representative: **Geering, Keith Edwin et al,**
**REDDIE & GROSE 16 Theobalds Road**
**London WC1X 8PL(GB)**

(54) Transparency viewer.

(57) A transparency viewer comprises a framework 10 having an array of apertures 14 through which mounted transparencies 39, received in a corresponding array of recesses 36 in a translucent tray 34, are viewed. The loaded tray 34 is slidable from the framework 10 and can readily be replaced by a different loaded tray. A viewing lens member 22 has a foot 52 at each corner engaging a guideway system made up of an outer rim 24 of the framework 10 and grooves 21 formed by flanges 20 on collars 18 which are a snap fit around the apertures 14. In this way, the lens member 22 can be moved along any rank or file of apertures 14 into registration with a chosen transparency. Gaps 26 in the rim 24 allow the lens member 22 to be removed from the framework 10 at one point only.

EP 0 063 196 A2

./...

FIG.1

TRANSPARENCY VIEWER

This invention relates to transparency viewers and provides a transparency viewer comprising a framework having an array of apertures through which transparencies may be viewed, guide means on the framework for receiving a transparency viewing eyepiece for movement of the eyepiece to register sequentially with apertures of the array and means on the framework for receiving removably a tray of transparencies for viewing of the transparencies through the apertures under illumination by transmitted light.

The invention also provides a tray for receiving transparencies for viewing under illumination by light transmitted through the tray, the tray having an array of wells for receiving transparencies and each well having means for retaining a transparency.

With such an arrangement, a plurality of tray members may each be loaded with an array of transparencies and a selected loaded tray fitted to the framework when it is desired to view its transparencies. The loaded trays, when not in use, may be stored in a suitable cabinet or folder. In this way, transparencies are easily indexed and maintained in a desired order whilst still being readily rearranged into a new order if necessary. Transfer from place to place of slides loaded into trays is also a simple matter.

The tray-receiving means are conveniently integral with the framework.

The framework and/or the tray are preferably moulded from plastics material and the tray is advantageously made from translucent material for entry of illuminating light and to act as a light diffuser.

An embodiment of the invention will now be described by way of example with reference to the drawings, in which:-

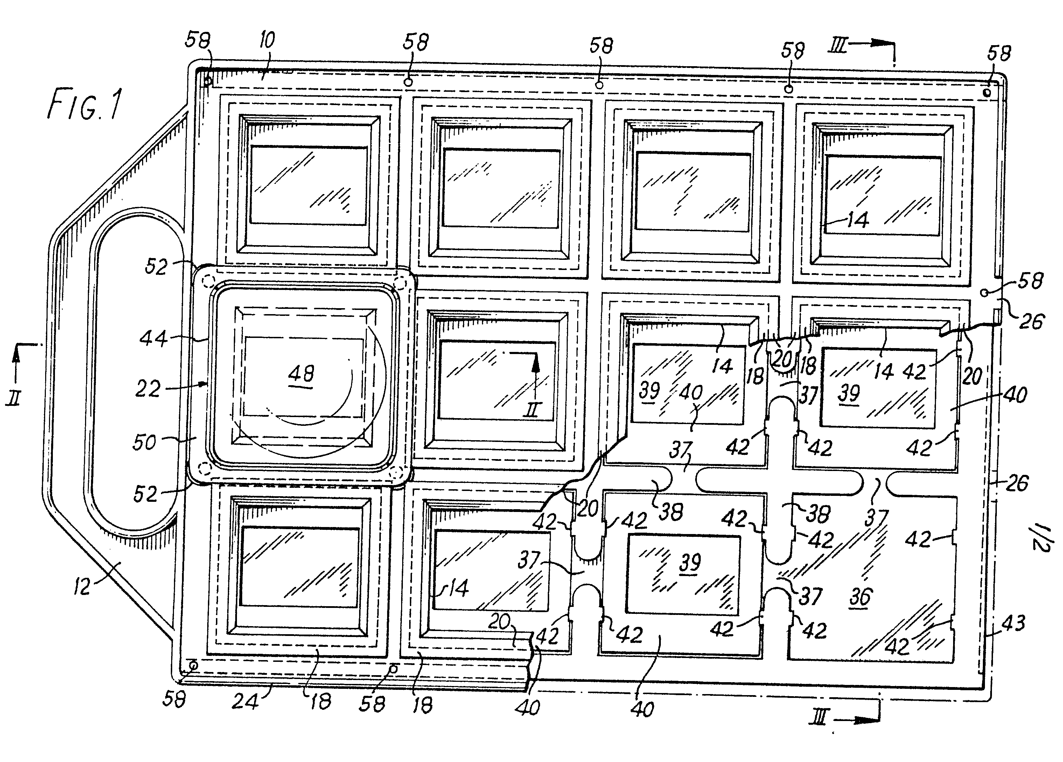

Figure 1 is a plan view of a transparency viewer partly cut-away and having a viewing member in position on it;

Figure 2 is a vertical section on the line II-II of Fig.1 on an enlarged scale; and

Figure 3 is a vertical section on the line III-III of Fig.1.

The transparency viewer shown in the drawings has a framework 10 which is injection moulded from a plastics material, for example, high-impact polystyrene. The framework 10 is formed into a handle 12 along one of its shorter sides and has twelve square apertures 14 through which transparencies may be viewed. Each aperture 14 is surrounded by a wall 16 having an inner face 17 which is inclined away from the aperture 14 toward its lower edge. A collar 18 is a snap fit within each wall 16 by engagement of an inclined surface 19 on the collar 18 and the inner face 17 of the wall 16. Each collar 18 has an outwardly-directed flange 20 around its upper edge, the flange 20 forming an external groove 21 extending around each aperture 14.

The grooves 21 form part of a system of guideways which, in use of the viewer, receive a viewing member 22 which is described in detail below. The guideway system is completed by an upper rim 24 extending around the periphery of the framework 10. Along the shorter side of the framework 10 opposite the handle 12 the upper rim 24 has two gaps 26 which allow removal of the viewing member 22 from the guideway system.

The framework 10 also has a lower rim 28 which extends peripherally of the framework 10 and which has an inwardly-directed flange 30 extending along each longer side of the framework. The flanges 30 form grooves 32 in which a transparency tray 34 is received and in which the tray 34 is slidable longitudinally of the framework 10 for its removal from the framework 10.

The tray 34 is moulded in one piece from a translucent plastics material and has an array of twelve recesses 36 which correspond with the apertures 14 in the framework 10. Depressions 37 in the raised portions 38 between the recesses 36 stiffen the tray 34. The recesses 36 are each dimensioned to receive a transparency 39 in a mount 40 which will usually be the standard size mount for 35 mm. film transparencies (50 x 50 mm.) but other sizes of mount (e.g. 110 film type or $2\frac{1}{4}$ in. square mounts) may also be provided for by suitable choice of dimensions for the apertures 14 and recesses 36. Each recess 36 has, on two opposite sides, respective pairs of undercut tabs 42 beneath which the mounts 40 of the transparencies 39 are retained. The tabs 42 may be replaced by undercut gussets at the corners of each recess 36 or by pips protruding from the sides of the recesses to engage the edges of the mounts 40. A lip 43 along one shorter side of the tray 34 forms a convenient surface for a label.

The translucent plastics material of the tray 34 acts, in use of the viewer, as a light diffuser but it is also possible to form the tray from opaque material and provide separate light-diffusing panels in each recess 36. Alternatively, the translucent material may be dispensed with completely and the recesses 36 formed simply with apertures for entry of light to illuminate the slides.

The illumination of the transparencies 38 in this embodiment is by ambient light but, as a modification, a light source may be mounted beneath the tray 34.

The tray 34, when removed from the viewer, may be stored loaded with its transparencies, together with other loaded trays, in a suitable cabinet or folder. Perforations for receiving the rings of a ring binder may be made in the tray 34 adjacent one of its edges.

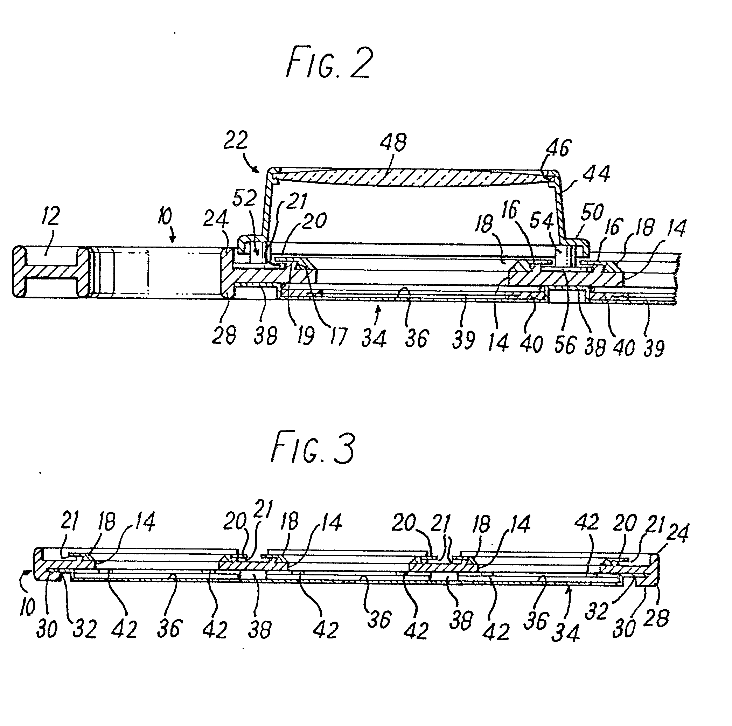

The viewing member 22 is shown in Fig.2 and has a wall 44 which is generally square in plan and dimensioned to surround one of the apertures 14 in the framework 10. The wall 44 has at its upper edge an internal groove 46 which receives a lens 48 for viewing a transparency 39 held in the tray 34 beneath the aperture 14 which underlies the viewing member 22.

The lower edge of the wall 44 is formed into an outwardly-directed flange 50 which has a foot 52 at each of its corners. The feet 52 are dimensioned to engage the guideway system of the framework 10 and allow the viewing member 22 to be moved along any rank or file of apertures 14 from one aperture 14 to another selected aperture 14 to view an array of transparencies 39. Each foot 52 consists of a cylindrical portion 54 extending from the flange 50 and a larger diameter end disc 56 which has a pip (not shown) on its circular face for engagement with a corresponding depression 58 on the framework when the viewing member 22 is in registration with an aperture 14.

The cylindrical portions 54 are dimensioned and spaced to pass between the flanges 18 around adjacent apertures 14 and the discs 56 to be engaged in the grooves 21 formed by the flanges 20 and walls 16. Whilst being movable from aperture 14 to aperture 14, the viewing member 22 is at the same time held by the flanges 20 and can only be removed from the framework 10 through the gaps 26 in the upper rim 24. This locking of the viewing member 22 to the framework 10 allows the transparency viewer to be tilted in use, for example to be held to a light source for illumination of transparencies 38, without the viewing member 22 falling from the framework 10.

By way of modification, gaps 26 may be provided elsewhere in the upper rim 24 for removal of the viewing member 22 at a different point. Alternatively the rim 24 may be continuous and a set of cut-outs through which the disc portion 56 can pass may be formed in the flanges 28 to allow the viewing member 22 to be lifted away after alignment of its feet 52 with the cut-outs.

As further modification, the viewing member 22 may be collapsible : the wall 44 being replaced by a set of hinged panels which can be built up by latching together, or alternatively, the wall being replaced either by a bellows or a set of telescoping elements.

CLAIMS :

1.          A transparency viewer comprising a framework having an array of apertures through which transparencies may be viewed, guide means on the framework for receiving a transparency viewing eyepiece for movement of the eyepiece to register sequentially with apertures of the array and means on the framework for receiving removably a tray of transparencies for viewing of the transparencies through the apertures under illumination by transmitted light.

2.          A viewer according to claim 1, in which the tray-receiving means are integral with the framework.

3.          A viewer according to claim 2, in which the framework and the tray-receiving means are a moulding of plastics material.

4.          A viewer according to any of claims 1 to 3, in which the tray-receiving means are for slidably receiving a tray.

5.          A viewer according to any of claims 1 to 4, in which the guide means are arranged for introduction and removal of an eyepiece at one point only.

6.          A viewer according to any of claims 1 to 5 having a transparency viewing eyepiece which is in engagement with the guide means and comprises a body supporting a viewing lens spaced from the apertures of the framework.

7.      A viewer according to claim 6, in which the eyepiece is movable in two mutually perpendicular directions for registration with the apertures.

8.      A tray for receiving transparencies for viewing under illumination by light transmitted through the tray, the tray having an array of wells for receiving transparencies and each well having means for retaining a transparency.

9.      A tray according to claim 8, which is a one-piece moulding of translucent plastics material.

10.      A tray according to claim 8 or 9 and having means for being mounted in a cabinet or folder.

11.      An assembly of a tray according to any of claims 8 to 10 and a viewer according to any of claims 1 to 7, the wells of the tray and the apertures of the framework being in corresponding arrays.

FIG.1

0063196

FIG. 2

FIG. 3